# EUROPEAN PATENT SPECIFICATION

(11) **EP 4 167 372 B1**
(45) Date of publication and mention of the grant of the patent: **24.12.2025**
(21) Application number: 22796123.2
(22) Date of filing: 27.04.2022
(51) Int. Cl.: H01M 50/503, H01M 50/269

(54) **BATTERY MODULE COMPRISING CONNECTION TERMINALS ARRANGED IN ZIGZAG MANNER**
BATTERIEMODUL MIT ZICKZACKFÖRMIG ANGEORDNETEN ANSCHLUSSKLEMMEN
MODULE DE BATTERIE COMPRENANT DES BORNES DE CONNEXION DISPOSÉES EN ZIGZAG

(30) Priority: 27.04.2021 KR 20210054117
(43) Date of publication of application: 19.04.2023
(73) Proprietor: LG Energy Solution, Ltd., Seoul 07335 (KR)
(72) Inventor: KIM, Tae Geun, Daejeon 34122 (KR); YIM, Sang Wook, Daejeon 34122 (KR); AN, Hyuk, Daejeon 34122 (KR); CHOI, Jong Hwa, Daejeon 34122 (KR); LEE, Hyoung Suk, Daejeon 34122 (KR); YOON, Young Il, Daejeon 34122 (KR)
(74) Representative: Hoffmann Eitle
(86) International application number: PCT/KR2022/005993
(87) International publication number: WO 2022/231290

(56) References cited:
- WO-A1-2020/252804
- WO-A1-2021/075690
- CN-A- 104 112 873
- CN-A- 104 112 873
- CN-A- 109 328 407
- CN-A- 110 620 209
- JP-A- 2001 216 950
- JP-A- 2012 054 197
- KR-A- 20180 113 246
- KR-A- 20190 106 541
- US-A1- 2012 064 387

## Description

### [Technical Field]

The present invention relates to a battery module including connection terminals disposed in zigzag, and more particularly to a battery module including connection terminals located in zigzag at centers of opposite sides of the battery module. When a plurality of battery modules is connected to each other, the connection terminals disposed in zigzag are coupled to each other in a concave-convex shape and are electrically connected to each other via an inter-busbar to constitute a battery pack.

### [Background Art]

Unlike small mobile devices, such as a smartphone, medium to large devices, such as an electric vehicle, require a high-output, large-capacity battery. A battery applied to the electric vehicle is generally used in a structure in which a plurality of battery cells is assembled. A battery module, in which a plurality of battery cells is connected to each other in series/parallel, or a battery pack, in which a plurality of battery modules is coupled to each other, is used. A plurality of battery cells is assembled to constitute a battery module, and a plurality of battery modules is assembled to constitute a battery pack. An electrode lead or tab provided at one battery cell is electrically connected to an electrode lead or tab provided at another battery cell, a connection terminal provided at one battery module is electrically connected to a connection terminal provided at another battery module.

Conventionally, in order to connect battery modules to each other, a busbar separately added to a case constituting a battery pack is used, or connection terminals of the battery modules are connected to each other via a separate electric wire. In this case, a separate space between the battery modules is needed, whereby energy density is lowered, and many processes and steps for electrical connection are required.

Patent Document 1 discloses a battery pack configured such that at least parts of contact surfaces of a plurality of battery module cases are coupled to each other, whereby the volume of the battery pack is less than the sum of the volumes of the module cases based on the outermost sides thereof.

In Patent Document 1, a concave-convex portion configured to allow adjacent cases to be engaged with each other when a plurality of battery modules is coupled to each other is added, whereby space is efficiently utilized. In Patent Document 1, each of the module cases has directivity, and therefore directivity must be considered at the time of assembly. In addition, physical coupling is considered, whereas electrical coupling, which is a fundamental function of an actual battery module, is not considered. In Patent Document 1, a separate space for electrical connection between the battery modules is necessary, and therefore an important construction for actually efficiently using the space is omitted.

Patent Document 2 discloses a battery module configured such that a worker who manufactures a battery pack can easily electrically connect battery modules to each other while space efficiency is maintained. Patent Document 2 relates to a battery module assembly in which a plurality of battery cells is mounted, the battery module assembly basically including a battery module, a first connection board assembly, and a second connection board assembly, wherein a second positive electrode busbar and a second negative electrode busbar of the second connection board assembly protrude in a direction perpendicular to a protruding direction of a first positive electrode terminal and a first negative electrode terminal of the first connection board assembly.

In Patent Document 2, a separate connection board is added for easy connection with an already prepared connection terminal, such as a busbar, when each battery module is disposed in a case of the battery pack.

Patent Document 1 and Patent Document 2 have shortcomings in that, although efficient use of space is intended, the battery modules can be assembled only in a specific direction, and a separate busbar is necessary for electrical connection.

### (Prior Art Documents)

(Patent Document 1) Korean Patent Application Publication No. 2021-0013861
(Patent Document 2) Korean Registered Patent Publication No. 1943493

WO 2020/252804 A1 concerns battery modules, power battery packs and vehicles. A battery module includes a plurality of single cells. Each single cell includes at least two opposing faces, one of the at least two faces is provided with a first positive terminal and a first negative terminal, and the other of the at least two faces is provided with a second positive terminal and a second negative terminal.

### [Disclosure]

### [Technical Problem]

The present invention has been made in view of the above problems, and it is an object of the present invention to provide a battery module configured such that, when a plurality of battery modules is coupled to each other, the battery modules are assembled irrespective of direction of the battery modules, whereby work efficiency is high, and no separate busbar is used, whereby space efficiency is high, and a battery pack constituted by the battery modules coupled to each other.

### [Technical Solution]

A battery module according to the present invention to accomplish the above object is defined in claim 1. The battery module includes one or more battery cells received in a case, wherein the case has a length direction, a width direction, and a thickness direction; and two connection terminals located respectively at opposite side surfaces in the width direction of the case and disposed at a middle part of each of the opposite side surfaces of the case, each of the connection terminals including one pair of a positive electrode terminal and a negative electrode terminal and one pair of a positive seating portion and a negative seating portion. For each of the connection terminals, the negative electrode terminal and the negative seating portion are disposed in between the positive electrode terminal and the positive seating portion. The positive electrode terminals and the negative electrode terminals are connected to the battery cell(s) in the case. For each connection terminal, the positive electrode terminal and the negative electrode terminal protrude outwards in the width direction of the case. The positive electrode terminals and the positive seating portions of both connection terminals are symmetric with respect to the center of the case, and the negative electrode terminals and the negative seating portions of both connection terminals are symmetric with respect to the center of the case.

For each of the connection terminals, a width of an actually protruding portion of each of the positive electrode terminal and a width of the negative electrode terminal may be less than the gap between the positive electrode terminal and the negative electrode terminal while the positive electrode terminal, wherein the width is a dimension in a direction perpendicular to the protrusion direction.

Outwardly protruding heights of the protruding positive electrode terminals and the protruding negative electrode terminals may be equal to each other, wherein the height is a dimension in the protrusion direction.

Each of the opposite side surfaces of the case may include a concave-convex portion.

An insulator may be disposed outside each of the protruding positive electrode terminals and the protruding negative electrode terminals.

Protruding shapes of the protruding positive electrode terminals and the protruding negative electrode terminals and an external shape of the case between the positive electrode terminals and a negative electrode terminal may be configured to be engaged with each other.

In addition, the present invention provides a battery pack including the battery module, wherein the battery module is coupled to another battery module.

The battery modules adjacent to each other may form a coupling portion at which the connection terminals are coupled to each other.

One positive electrode terminal of one of the battery modules adjacent to each other and one negative electrode terminal of another battery module closest thereto may be electrically connected to each other via an inter-busbar.

In addition, the present invention may provide possible combinations of the above solving means within the scope of the appended claims.

### [Advantageous Effects]

As is apparent from the above description, a battery module according to the present invention is configured to be physically and electrically connected to another battery module, whereby coupling space in which the battery modules are coupled to each other is reduced, and therefore energy density per unit volume is high. In addition, the battery module has a symmetrical structure, whereby the battery module is easily assembled irrespective of direction, and therefore work efficiency is high.

A battery module connection portion is constituted by protruding connection terminals, and connection terminals of adjacent battery modules are easily electrically connected to each other using an inter-busbar.

In addition, when battery modules are coupled to each other, each of the connection terminals of the battery modules includes a positive electrode and a negative electrode, and therefore change between series connection and parallel connection is easily performed by changing only the shape of the inter-busbar.

### [Description of Drawings]

FIG. 1 is a schematic view of a battery module according to a first embodiment of the present invention.
FIG. 2 is a schematic view of a connection terminal of the battery module according to the first embodiment of the present invention.
FIG. 3 is a front view showing the coupling shape of two adjacent battery modules according to the first embodiment of the present invention with an enlarged view of a coupling portion.
FIG. 4 is a view showing various modifications of a coupling portion according to a first embodiment of the present invention.
FIG. 5 is a perspective view of the connection terminal of the battery module according to the first embodiment of the present invention.
FIG. 6 is a front view showing the coupling portion at which the connection terminals of the two adjacent battery modules according to the first embodiment of the present invention are coupled to each other in a concave-convex shape.
FIG. 7 is a top view showing the state in which the connection terminals of the two adjacent battery modules according to the first embodiment of the present invention are coupled to each other in the concave-convex shape and are electrically connected to each other using an inter-busbar.
FIG. 8 is an exploded perspective view showing an example in which the connection terminals of the two adjacent battery modules according to the first embodiment of the present invention are electrically connected to each other using the inter-busbar.
FIG. 9 is a view showing various modifications of an inter-busbar according to the present invention.
FIG. 10 is a front view showing the coupling shape of two adjacent battery modules having concave-convex portions according to a second embodiment of the present invention.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

In addition, a description to embody elements through limitation or addition may be applied to all inventions, unless particularly restricted, and does not limit a specific invention.

Also, in the description of the invention and the claims of the present application, singular forms are intended to include plural forms unless mentioned otherwise.

Also, in the description of the invention and the claims of the present application, "or" includes "and" unless mentioned otherwise. Therefore, "including A or B" means three cases, namely, the case including A, the case including B, and the case including A and B.

In addition, all numeric ranges include the lowest value, the highest value, and all intermediate values therebetween unless the context clearly indicates otherwise.

Hereinafter, embodiments of the present invention will be described in detail with reference to the accompanying drawings.

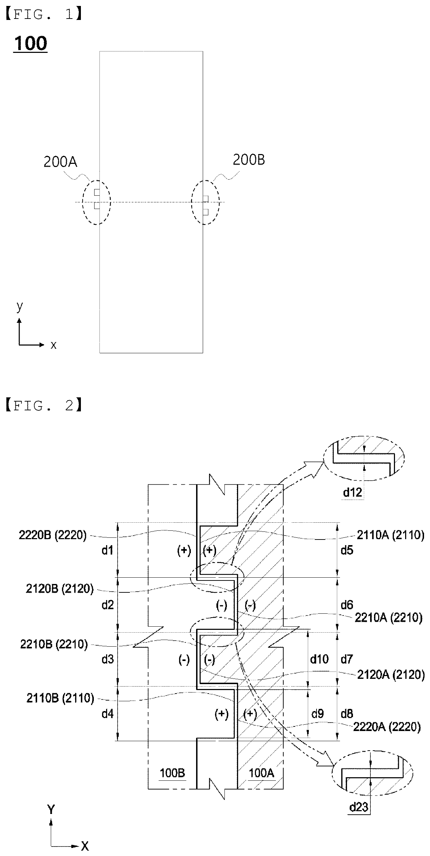

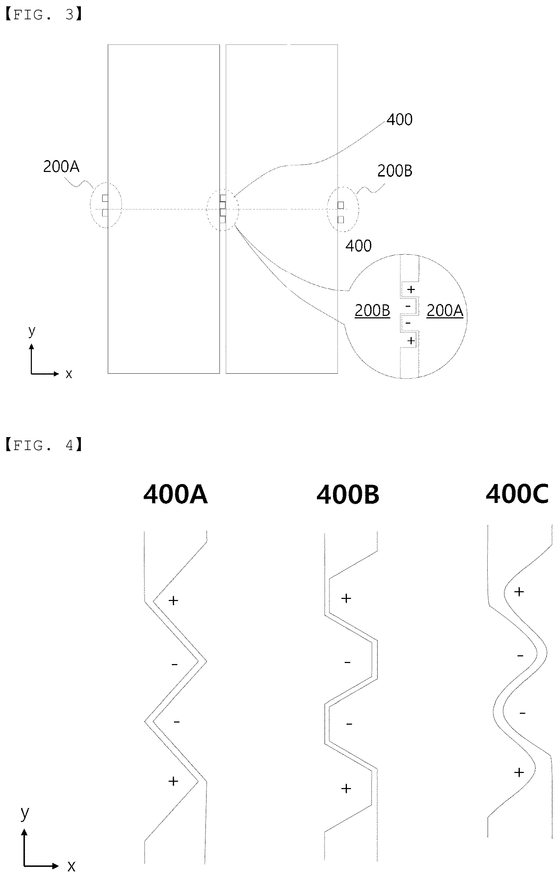

FIG. 1 is a schematic view of a battery module according to a first embodiment of the present invention, FIG. 2 is a schematic view of a connection terminal of the battery module according to the first embodiment of the present invention, and FIG. 3 is a front view showing the coupling shape of two adjacent battery modules according to the first embodiment of the present invention with an enlarged view of a coupling portion.

Referring to FIGS. 1 and 2, the battery module 100 according to the first embodiment of the present invention includes one or more battery cells (not shown) received in a case, wherein connection terminals 200A and 200B, each of which includes at least one positive electrode terminal and/or at least one negative electrode terminal, are located respectively at opposite side surfaces of the case.

In the case, the battery cells may be stably disposed by a cartridge, a stacking frame, etc. Here, each battery cell includes an electrode assembly, a battery case, and an electrode lead and/or an electrode tab. An electrolytic solution may be received in the battery case of the battery cell. Here, the electrode lead may include a positive electrode lead and a negative electrode lead. The positive electrode lead may be connected to a positive electrode tab of the electrode assembly, and the negative electrode lead may be connected to a negative electrode tab of the electrode assembly.

In the present invention, the battery cell may be a pouch-shaped secondary battery. For the pouch-shaped secondary battery, the battery case may be a pouch sheathing member. The pouch sheathing member may be configured to have a structure in which metal foil, such as aluminum, is interposed between insulating layers. When the battery cell is constituted by a pouch-shaped battery, as described above, connection between a plurality of battery cells may be more easily achieved.

In the battery cell, the two electrode leads or tabs, i.e. the positive electrode lead or the positive electrode tab and the negative electrode lead or the negative electrode tab, may be provided so as to protrude in opposite directions or in the same direction.

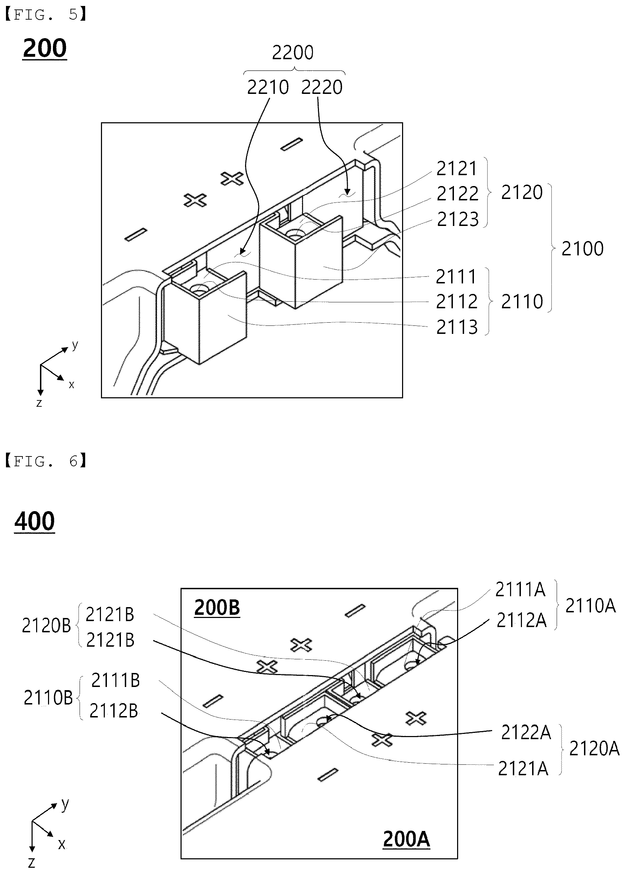

A busbar configured to electrically connect the electrode leads or tabs of the battery cells stacked in the module case to each other may be included, and a connection board assembly including an inner terminal connected to the busbar may be included. The connection board assembly may be separately located in the module case or may be one side surface of the module case. Specifically, in the present invention, when the connection board assembly is separately located in the module case, the connection board assembly may be located in tight contact with one side surface of the module case, and the connection board assembly may include an electrode terminal 2100 (see FIG. 5), a description of which will follow, which is electrically connected to the inner electrode terminal located at the connection board assembly via the busbar. The inner electrode terminal and the electrode terminal 2100 (see FIG. 5) may be formed at corresponding positions, or may be formed at different positions. The electrode terminal 2100 (see FIG. 5) may perform a function of changing the position of the electrodes of the battery module 100. That is, the electrode terminal 2100 (see FIG. 5) performs a function of changing the position and/or direction of the electrodes of the battery module, and provides an electrode configured to connect the battery module 100 to the outside.

The connection terminals 200 (see FIG. 5) are provided at middle positions of opposite side surfaces of the module case of the battery module 100. In FIG. 1, the connection terminals are shown as the connection terminals 200A located at the left side surface and the connection terminals 200B located at the right side surface. However, division therebetween is made for convenience of describing the present invention and making the drawings.

The connection terminals 200A and 200B according to the first embodiment of the present invention will be described in detail with reference to FIG. 5 together with the description of FIGS. 2 and 3.

FIG. 2 shows the connection terminals of the two battery modules located adjacent to each other, as shown in FIG. 3, in an enlarged state.

As shown in FIG. 3, each of the connection terminals 200A and 200B includes an electrode terminal protruding from one side surface of a corresponding one of the battery modules in an external direction (x-axis direction). The electrode terminal includes a first electrode terminal 2110 and a second electrode terminal 2120. In the present invention, the first electrode terminal may be a positive electrode or a negative electrode, and the second electrode terminal may be a negative electrode or a positive electrode. The first electrode terminal and the second electrode terminal are electrode terminals having opposite electrical properties.

Each of the connection terminals 200A and 200B includes an electrode terminal 2100 including a first electrode terminal 2110 and a second electrode terminal 2120 and a seating portion 2200 including a first seating portion 2210 and a second seating portion 2220.

Specifically, the electrode terminal 2100 includes a first electrode terminal 2110 and a second electrode terminal 2120 located spaced apart from each other by a predetermined distance, and the seating portion 2200 includes a first seating portion 2210 formed between the first electrode terminal 2110 and the second electrode terminal 2120 and a second seating portion 2220 located adjacent to one of the first electrode terminal 2110 and the second electrode terminal 2120. That is, the first electrode terminal 2110/first seating portion 2210/second electrode terminal 2120/second seating portion 2220 constitute one connection terminal 200.

In FIG. 2, reference symbols are denoted in order to distinguish between a first electrode terminal 2110A, a second electrode terminal 2120A, a first seating portion 2210A, and a second seating portion 2220A constituting the connection terminal 200A and a first electrode terminal 2110B, a second electrode terminal 2120B, a first seating portion 2210B, and a second seating portion 2220B constituting the connection terminal 200B; however, a description of structural elements having the same names may be commonly applied.

In FIG. 2, the electrode terminals of the battery module 100A are located in and coupled to the seating portions of the battery module 100B, and the electrode terminals of the battery module 100B are located in and coupled to the seating portions of the battery module 100A. In FIG. 2, for convenience of description, a gap is shown as being defined between the outermost side surface of each of the electrode terminals and the innermost side surface of a corresponding one of the seating portions. Actually, however, each of the electrode terminals and a corresponding one of the seating portions may be coupled to each other in tight contact with each other.

In the first embodiment of the present invention, the width d9 of each of the first electrode terminals 2110A and 2110B and the width of each of the second electrode terminals 2120A and 2120B are equal to each other, and the width d10 of each of the first seating portions 2210A and 2210B and the width of each of the second seating portions 2220A and 2220B are equal to each other. The connection terminals 200A and 200B coupled to each other at the battery module 100A and the battery module 100B have a symmetrical structure of the first electrode terminal 2110/first seating portion 2210/second electrode terminal 2120/second seating portion 2220 or the second seating portion 2220/second electrode terminal 2120/first seating portion 2210/first electrode terminal 2110.

In the state in which the electrode terminals of the battery module 100A and the electrode terminals of the battery module 100B are completely coupled to each other, a predetermined gap is defined between the electrode terminals coupled to each other so as to be engaged with each other.

Specifically, as shown in FIG. 2, the second electrode terminal 2120B of the connection terminal 200B of the battery module 100B is located in the first seating portion 2210A of the connection terminal 200A of the battery module 100A, a predetermined gap d12 is defined between opposite surfaces of the second electrode terminal 2120B and the first electrode terminal 2110A, and a predetermined gap d23 is defined between opposite surfaces of the second electrode terminal 2120B and the second electrode terminal 2120A. In the present invention, as described above, adjacent electrode terminals are disposed spaced apart from each other by the predetermined gaps d12 and d23 at the coupling portion, and therefore the battery modules may be easily coupled to each other.

In FIG. 2, each of d2 and d6 indicates the length from the center of the predetermined gap d12 to the center of the predetermined gap d23, and d1 to d8 are values designed so as to have the same value.

Meanwhile, the center line between d2 and d3 and the center line between d6 and d7 are located so as to pass through the center of the electrode terminal 2100 in a y-axis direction.

The protruding heights (x-axis direction) of the electrode terminals 2100 protruding outwards from the battery module case are equal to each other. This is advantageous to stable coupling between the connection terminals 200, improvement in space efficiency of the coupling portion, and mounting of an inter-busbar 3000 for electrical connection, a description of which will follow, without external stress due to distortion or deformation.

FIG. 4 is a view showing various modifications of a coupling portion 400 according to a first embodiment of the present invention.

In the present invention, the coupling portion, at which the protruding shape of the electrode terminals 2100 constituting the connection terminal 200 and/or the concave shape of the seating portions 2200 are coupled to each other, may be formed as a triangular coupling portion 400A, a trapezoidal coupling portion 400B, or a wavy coupling portion 400C. When the shape of the portion from which the electrode terminal actually protrudes is triangular or wavy, the width of the portion from which the electrode terminal actually protrudes may be equal to the distance between the electrode terminals.

In addition, as another unrestricted example, the width of the portion from which the electrode terminal actually protrudes may not be uniform. The width of the outermost side portion may be largest, and the width may be gradually decreased toward the module case of the battery module. On the contrary, the width of the outermost side portion may be smallest, and the width may be gradually increased toward the module case. In the structure in which the width of the outermost side portion is largest and the width is gradually decreased toward the module case, the force of coupling between the battery module and another battery module adjacent thereto is further increased after coupling therebetween is performed, which is advantageous to improving stability of the battery modules connected to each other.

FIG. 5 is a perspective view of the connection terminal of the battery module according to the first embodiment of the present invention.

Referring to FIG. 5, the connection terminal 200 according to the first embodiment of the present invention is shown in the sequence of the first electrode terminal/first seating portion/second electrode terminal/second seating portion; however, the connection terminal may be disposed in the sequence of the second electrode terminal/first seating portion/first electrode terminal/second seating portion.

The connection terminal 200 according to the first embodiment of the present invention is located so as to correspond to the center of each of the opposite side surfaces of the battery module. In addition, the connection terminal may be located at the center of the battery module in a thickness direction (z-axis direction). In addition, even though the battery module 100 is rotated 180 degrees in a vertical direction (y-axis direction) or even though the battery module is rotated 180 degrees about the x-axis, i.e. the battery module is turned inside out in the forward-rearward direction (based on the surface of paper), there is no change in position of the connection terminal 200 at the opposite side surfaces of the battery module case based on the front surface (xy plane). In this case, there is an advantage in that, when adjacent battery modules are coupled to each other, the side surfaces of the battery module cases at which the connection terminals 200 are located can be adjacent to and coupled to each other without consideration of the disposition direction of the battery modules.

The first electrode terminal 2110 includes a first electrode busbar 2111, a first electrode busbar through-hole 2112, and a first electrode cover 2113, and the second electrode terminal 2120 includes a second electrode busbar 2121, a second electrode busbar through-hole 2122, and a second electrode cover 2123. Here, the first electrode busbar through-hole 2112 and the second electrode busbar through-hole 2122 may fix the first electrode busbar 2111 and the second electrode busbar 2121 using separate fixing means, respectively, or may be used as regions to which inter-busbars are fixed. In addition, the first electrode cover 2113 covers the first electrode busbar 2111 and the first electrode busbar through-hole 2112, and the second electrode cover 2123 covers the second electrode busbar 2121 and the second electrode busbar through-hole 2122. Each of the first electrode cover 2113 and the second electrode cover 2123 is located so as to wrap the side surface (xz plane) of the electrode terminal and the side surface (yz plane) of the electrode terminal located so as to be opposite the battery module, and is made of an insulating material. Additionally, when the battery modules are stacked, the xy plane may be wrapped. The protruding shape of the electrode terminal 2100 and the external shape of the electrode cover between the electrode terminals 2100 may be engaged with each other.

A protrusion (not shown) protruding while having a predetermined thickness (x-axis direction) may be formed on the surface of the second seating portion 2220 opposite the second electrode terminal 2120. The protrusion may be formed as the result of extension of a part of the module case of the battery module. The protrusion is advantageous to stable disposition of electrode terminals of adjacent battery modules located in the second seating portion 2220.

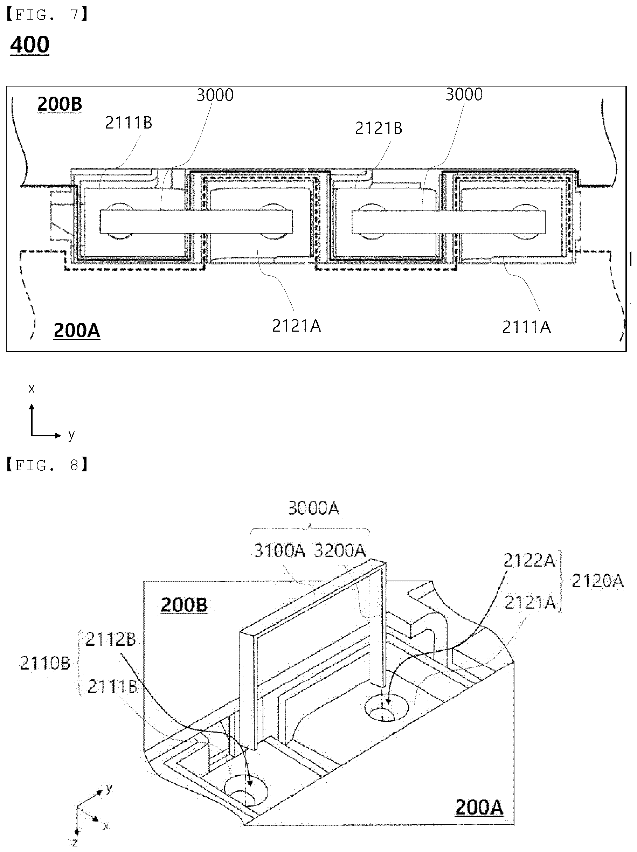

FIG. 6 is a front view showing the coupling portion at which the connection terminals of the two adjacent battery modules according to the first embodiment of the present invention are coupled to each other in a concave-convex shape, FIG. 7 is a top view showing two alternative possibilities to connect the terminals of the two adjacent battery modules according to the first embodiment of the present invention are coupled to each other in the concave-convex shape and are electrically connected to each other using an inter-busbar, in this configuration, only one of both disclosed inter-busbars may be used, and FIG. 8 is an exploded perspective view showing an example in which the connection terminals of the two adjacent battery modules according to the first embodiment of the present invention are electrically connected to each other using the inter-busbar.

The coupling portion at which the connection terminals of the two adjacent battery modules are coupled to each other in the concave-convex shape will be described with reference to FIGS. 5 and 6. The connection terminals 200A and 200B of the two adjacent battery modules are coupled to each other in the concave-convex shape to form the coupling portion 400. That is, the first electrode terminal 2110A and the second electrode terminal 2120A of the connection terminal 200A may be located at and coupled to the second seating portion 2220 and the first seating portion 2210 of the connection terminal 200B of the battery module adjacent thereto.

Referring to FIG. 7, the electrode terminals 2100 located at the coupling portion 400 are electrically connected to each other using the inter-busbar 3000. In FIG. 7, the electrode terminals of the connection terminal 200A of the battery module, under a continuous broken line, and the connection terminal 200B of the battery module adjacent thereto, above a continuous solid line, are coupled to each other in a concave-convex shape, and either a first electrode busbar 2111A or a second electrode busbar 2121A of the connection terminal 200A are electrically connected to respectively either a second electrode busbar 2121B or respectively a first electrode busbar 2111B of the connection terminal 200B adjacent thereto via the inter-busbar 3000. In this configuration, only one inter-busbar 3000 may be mounted for a series connection.

Although the inter-busbar 3000 connects a positive electrode and a negative electrode to each other in FIG. 7, parallel connection between a positive electrode and another positive electrode or between a negative electrode and another negative electrode is also possible as needed.

Referring to FIG. 8, an inter-busbar 3000A may be formed in the shape of "[", and may include an inter-busbar horizontal portion 3100A and inter-busbar vertical portions 3200A bent from opposite sides of the inter-busbar horizontal portion 3100A. Here, the two inter-busbar vertical portions 3200A are inserted respectively through a first electrode busbar through-hole 2112B and a second electrode busbar through-hole 2122A to electrically connect the connection terminal 200A and the connection terminal 200B to each other. In FIG. 8, an integrated inter-busbar 3000 having bent opposite ends is shown; however, the inter-busbar horizontal portion and the inter-busbar vertical portions may be separated from each other. As an example, holes may be formed in opposite ends of the inter-busbar horizontal portion, the inter-busbar vertical portions may be coupled to the holes of the inter-busbar horizontal portion, and the inter-busbar vertical portions may be coupled to the electrode terminals. For the separable inter-busbar 3000, the inter-busbar horizontal portion and the inter-busbar vertical portions may be different in standards from each other, which is advantageous to connection between battery modules having various standards.

In the present invention, the inter-busbar vertical portions 3200A of the inter-busbar 3000 may be mounted in the electrode busbar through-holes, and an additional fixing member configured to prevent separation of the inter-busbar 3000 mounted therein due to vibration may be included.

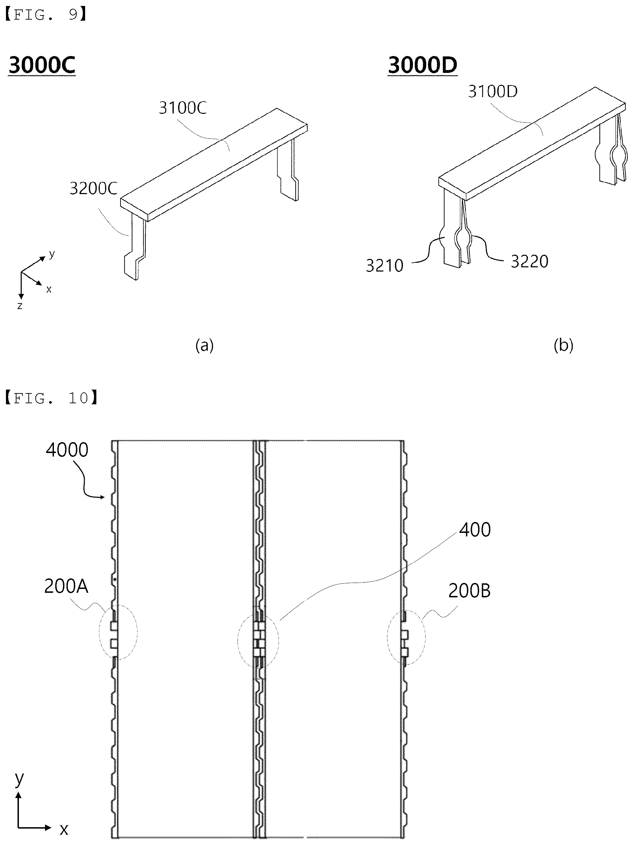

FIG. 9 is a view showing various modifications of the inter-busbar according to the present invention. As shown in FIG. 9, an inter-busbar 3000C may include an inter-busbar horizontal portion 3100C and inter-busbar vertical portions 3200C bent from opposite sides of the inter-busbar horizontal portion 3100C. Distal ends of the two inter-busbar vertical portions 3200C located so as to face each other may be bent. The force of tight contact between the bent distal ends and the inner surfaces of the electrode busbar through-holes is increased, which is advantageous to prevention of separation of the inter-busbar.

In addition, an inter-busbar 3000D may include an inter-busbar horizontal portion 3100D and inter-busbar vertical portions 3200D bent from opposite sides of the inter-busbar horizontal portion 3100D. The inter-busbar 3000D may include inter-busbar vertical portions extending downwards from opposite sides of the inter-busbar horizontal portion 3100D in a trapezoidal shape. Alternatively, each of the inter-busbar vertical portions may include a pair of inter-busbar vertical portion plates 3210 and 3220 having a distance therebetween gradually increased with an increasing distance from the inter-busbar horizontal portion 3100D. In addition, a bent portion configured to be bent outwards may be located at a predetermined position of each of the pair of inter-busbar vertical portion plates. Although the bent portion is shown as having a gentle curve, it is obvious that the shape of the bent portion is not restricted.

FIG. 10 is a front view showing the coupling shape of two adjacent battery modules having concave-convex portions according to a second embodiment of the present invention.

The battery module according to the second embodiment of the present invention is identical to the battery module according to the first embodiment described with reference to FIGS. 1 to 9 except that concave-convex portions are formed at opposite side surfaces of a case of the battery module, and therefore only the concave-convex portions formed at the side surfaces of the case will be described.

The battery module according to the second embodiment of the present invention includes a concave-convex portion 4000 formed at each of the opposite side surfaces of the case. The concave-convex portion 4000 is located at the remaining region of the side surface of the case excluding the region at which the connection terminal 200 is located. The concave-convex portion 4000 formed at one side surface of the battery module is configured such that concave portions and convex portions are alternately formed and disposed in symmetry so as to correspond to convex portions and concave portions alternately disposed at the other side surface opposite the one side surface. When the battery module is rotated, therefore, the same shape is maintained, which is advantageous to easy coupling between the battery modules. The concave-convex portion 4000 is advantageous to improvement in coupling stability between the battery modules and is advantageous to prevention of separation or deformation of the coupling portion 400.

The shape of the concave-convex portion 4000 may be a polygon, such as a triangle, a quadrangle, or a pentagon, or a curved waveform. As an unrestricted example of the concave-convex portion, the concave-convex portion may be a dummy terminal that has the same interval and shape as the positive electrode terminal and the negative electrode terminal but is not actually electrically connected.

The concave-convex portion 4000 may be formed integrally with the case of the battery module, and may be made of the same material as the case. In addition, the concave-convex portion 4000 may be separately manufactured, and may then be adhered or stuck to the side surface of the battery module. When the concave portions and the convex portions are separately manufactured, the concave portions and the convex portions may be made of the same material as the module case or an elastic material. When the concave portions and the convex portions are made of an elastic material, the concave portions and the convex portions may absorb external impact to protect the battery module.

Those skilled in the art to which the present invention pertains will appreciate that various applications and modifications are possible within the scope of the appended claims, based on the above description.

### (Description of Reference Symbols)

100, 100A, 100B: Battery modules
200, 200A, 200B: Connection terminals
400, 400A, 400B, 400C: Coupling portions
2100: Electrode terminal
2110, 2110A, 2110B: First electrode terminals
2111, 2111A, 2111B: First electrode busbars
2112, 2112B: First electrode busbar through-holes
2113: First electrode cover
2120, 2120A, 2120B: Second electrode terminals
2121, 2121A, 2121B: Second electrode busbars
2122, 2122A: Second electrode busbar through-holes
2123: Second electrode cover
2200: Seating portion
2210, 2210A, 2210B: First seating portions
2220, 2220A, 2220B: Second seating portions
3000, 3000A, 3000C, 3000D: Inter-busbars
3100A, 3100C, 3100D: Inter-busbar horizontal portions
3200A, 3200C: Inter-busbar vertical portions
3210, 3220: Inter-busbar vertical portion plates
4000: Concave-convex portion

## Claims

1. A battery module (100; 100A, 100B), comprising:
one or more battery cells received in a case, wherein the case has a length direction (y), a width direction (x), and a thickness direction (z); and
two connection terminals (200A, 200B) located respectively at opposite side surfaces in the width direction (x) of the case and disposed at a middle part of each of the opposite side surfaces of the case,
each of the connection terminals (200A, 200B) including one pair of a positive electrode terminal (2110A, 2110B) and a negative electrode terminal (2120A, 2120B) and one pair of a positive seating portion (2220A, 2220B) and a negative seating portion (2210A, 2210B),
wherein for each of the connection terminals (200A, 200B), the negative electrode terminal (2120A, 2120B) and the negative seating portion (2210A, 2210B) are disposed in between the positive electrode terminal (2110A, 2110B) and the positive seating portion (2220A, 2220B),
wherein the positive electrode terminals (2110A, 2110B) and the negative electrode terminals (2120A, 2120B) are connected to the battery cell(s) in the case,
wherein for each connection terminal (200A, 200B), the positive electrode terminal (2110A, 2110B) and the negative electrode terminal (2120A, 2120B) protrude outwards in the width direction (x) of the case, and
wherein the positive electrode terminals (2110A, 2110B) and the positive seating portions (2220A, 2220B) of both connection terminals (200A, 200B) are symmetric with respect to the center of the case, and the negative electrode terminals (2120A, 2120B) and the negative seating portions (2210A, 2210B) of both connection terminals (200A, 200B) are symmetric with respect to the center of the case.

2. The battery module (100) according to claim 1, wherein for each of the connection terminals (200A, 200B), a width (d9) of an actually protruding portion of the positive electrode terminal (2110A, 2110B) and a width of the negative electrode terminal (2120A, 2120B) is less than the gap between the positive electrode terminal (2110A, 2110B) and the negative electrode terminal (2120A, 2120B), wherein the width is a dimension in a direction perpendicular to the protrusion direction.

3. The battery module (100, 100A, 100B) according to claim 1, wherein outwardly protruding heights of the protruding positive electrode terminals (2110A, 2110B) and the protruding negative electrode terminals (2120A, 2120B) are equal to each other, wherein the height is a dimension in the protrusion direction (x).

4. The battery module (100) according to claim 1, wherein each of the opposite side surfaces of the case includes a concave-convex portion (4000).

5. The battery module (100) according to claim 1, wherein an insulator is disposed outside each of the protruding positive electrode terminals (2110A, 2110B) and the protruding negative electrode terminals (2120A, 2120B).

6. The battery module (100) according to claim 1, wherein protruding shapes of the protruding positive electrode terminals (2110A, 2110B) and the protruding negative electrode terminals (2120A, 2120B) and an external shape of the case between the positive electrode terminals (2110A, 2110B) and a negative electrode terminal (2120A, 2120B) are configured to be engaged with each other.

7. A battery pack comprising the battery module (100; 100A, 100B) according to any one of claims 1 to 6, wherein the battery module (100A) is coupled to another battery module (100B).

8. The battery pack according to claim 7, wherein the battery modules (100A, 100B) adjacent to each other form a coupling portion (400; 400A, 400B, 400C) at which the connection terminals (200A, 200B) are coupled to each other.

9. The battery pack according to claim 8, wherein one positive electrode terminal (2110B) of one of the battery modules (100B) adjacent to each other and one negative electrode terminal (2120A) of another battery module (100A) closest thereto are electrically connected to each other via an inter-busbar (3000A).

## Patentansprüche

1. Batteriemodul (100; 100A, 100B), umfassend:
eine oder mehrere Batteriezellen, die in einem Gehäuse aufgenommen sind, wobei das Gehäuse eine Längenrichtung (y), eine Breitenrichtung (x) und eine Dickenrichtung (z) aufweist; und
zwei Anschlussklemmen (200A, 200B), die sich jeweils an gegenüberliegenden Seitenflächen des Gehäuses in der Breitenrichtung (x) befinden und in einem mittleren Teil der jeweiligen gegenüberliegenden Seitenfläche des Gehäuses angeordnet sind,
wobei jede der Anschlussklemmen (200A, 200B) ein Paar aus einer positiven Elektrodenklemme (2110A, 2110B) und einer negativen Elektrodenklemme (2120A, 2120B) und ein Paar aus einem positiven Sitzabschnitt (2220A, 2220B) und einem negativen Sitzabschnitt (2210A, 2210B) einschließt,
wobei für jede der Anschlussklemmen (200A, 200B) die negative Elektrodenklemme (2120A, 2120B) und der negative Sitzabschnitt (2210A, 2210B) zwischen der positiven Elektrodenklemme (2110A, 2110B) und dem positiven Sitzabschnitt (2220A, 2220B) angeordnet sind,
wobei die positiven Elektrodenklemmen (2110A, 2110B) und die negativen Elektrodenklemmen (2120A, 2120B) mit der/den Batteriezelle(n) im Gehäuse geschaltet sind,
wobei für jede Anschlussklemme (200A, 200B) die positive Elektrodenklemme (2110A, 2110B) und die negative Elektrodenklemme (2120A, 2120B) in der Breitenrichtung (x) des Gehäuses nach außen hervorstehen, und
wobei die positiven Elektrodenklemmen (2110A, 2110B) und die positiven Sitzabschnitte (2220A, 2220B) beider Anschlussklemmen (200A, 200B) bezüglich der Gehäusemitte symmetrisch sind und die negativen Elektrodenklemmen (2120A, 2120B) und die negativen Sitzabschnitte (2210A, 2210B) beider Anschlussklemmen (200A, 200B) bezüglich der Gehäusemitte symmetrisch sind.

2. Batteriemodul (100) nach Anspruch 1, wobei für jede der Anschlussklemmen (200A, 200B) eine Breite (d9) eines tatsächlich hervorstehenden Abschnitts der positiven Elektrodenklemme (2110A, 2110B) und eine Breite der negativen Elektrodenklemme (2120A, 2120B) kleiner sind als der Abstand zwischen der positiven Elektrodenklemme (2110A, 2110B) und der negativen Elektrodenklemme (2120A, 2120B), wobei die Breite eine Abmessung in einer Richtung senkrecht zur Hervorstehrichtung ist.

3. Batteriemodul (100, 100A, 100B) nach Anspruch 1, wobei nach außen hervorstehende Höhen der hervorstehenden positiven Elektrodenklemmen (2110A, 2110B) und der hervorstehenden negativen Elektrodenklemmen (2120A, 2120B) einander gleich sind, wobei die Höhe eine Abmessung in der Hervorstehrichtung (x) ist.

4. Batteriemodul (100) nach Anspruch 1, wobei jede der gegenüberliegenden Seitenflächen des Gehäuses einen konkav-konvexen Abschnitt (4000) einschließt.

5. Batteriemodul (100) nach Anspruch 1, wobei außerhalb jeweils der hervorstehenden positiven Elektrodenklemmen (2110A, 2110B) und der hervorstehenden negativen Elektrodenklemmen (2120A, 2120B) ein Isolator angeordnet ist.

6. Batteriemodul (100) nach Anspruch 1, wobei hervorstehende Formen der hervorstehenden positiven Elektrodenklemmen (2110A, 2110B) und der hervorstehenden negativen Elektrodenklemmen (2120A, 2120B) und eine Außenform des Gehäuses zwischen den positiven Elektrodenklemmen (2110A, 2110B) und einer negativen Elektrodenklemme (2120A, 2120B) so konfiguriert sind, dass sie miteinander in Eingriff gebracht werden können.

7. Batteriepack, umfassend das Batteriemodul (100; 100A, 100B) nach einem der Ansprüche 1 bis 6, wobei das Batteriemodul (100A) mit einem weiteren Batteriemodul (100B) gekoppelt ist.

8. Batteriepack nach Anspruch 7, wobei die einander benachbarten Batteriemodule (100A, 100B) einen Kopplungsabschnitt (400; 400A, 400B, 400C) bilden, an dem die Anschlussklemmen (200A, 200B) miteinander gekoppelt sind.

9. Batteriepack nach Anspruch 8, wobei eine positive Elektrodenklemme (2110B) eines der einander benachbarten Batteriemodule (100B) und eine diesem nächstgelegene negative Elektrodenklemme (2120A) eines weiteren Batteriemoduls (100A) über eine Zwischensammelschiene (3000A) elektrisch miteinander geschaltet sind.

## Revendications

1. Module de batterie (100 ; 100A, 100B), comprenant :
un ou plusieurs cellules de batterie logées dans un boîtier, dans lequel le boîtier présente une direction de longueur (y), une direction de largeur (x) et une direction d'épaisseur (z) ; et
deux bornes de connexion (200A, 200B) situées respectivement au niveau de surfaces latérales opposées dans la direction de largeur (x) du boîtier et disposées au niveau d'une partie médiane de chacune des surfaces latérales opposées du boîtier,
chacune des bornes de connexion (200A, 200B) incluant une paire comprenant une borne d'électrode positive (2110A, 2110B) et une borne d'électrode négative (2120A, 2120B) et une paire comprenant une portion d'appui positive (2220A, 2220B) et une portion d'appui négative (2210A, 2210B),
dans lequel, pour chacune des bornes de connexion (200A, 200B), la borne d'électrode négative (2120A, 2120B) et la portion d'appui négative (2210A, 2210B) sont disposées entre la borne d'électrode positive (2110A, 2110B) et la portion d'appui positive (2220A, 2220B),
dans lequel les bornes d'électrode positives (2110A, 2110B) et les bornes d'électrode négatives (2120A, 2120B) sont reliées à la/aux cellule(s) de batterie dans le boîtier,
dans lequel, pour chaque borne de connexion (200A, 200B), la borne d'électrode positive (2110A, 2110B) et la borne d'électrode négative (2120A, 2120B) font saillie vers l'extérieur dans la direction de largeur (x) du boîtier, et
dans lequel les bornes d'électrode positives (2110A, 2110B) et les portions d'appui positives (2220A, 2220B) des bornes de connexion (200A, 200B) sont à la fois symétriques par rapport au centre du boîtier, et les bornes d'électrode négatives (2120A, 2120B) et les portions d'appui négatives (2210A, 2210B) des deux bornes de connexion (200A, 200B) sont symétriques par rapport au centre du boîtier.

2. Module de batterie (100) selon la revendication 1,
dans lequel, pour chacune des bornes de connexion (200A, 200B), une largeur (d9) d'une portion effectivement saillante de la borne d'électrode positive (2110A, 2110B) et une largeur de la borne d'électrode négative (2120A, 2120B) est inférieure à l'écartement entre la borne d'électrode positive (2110A, 2110B) et la borne d'électrode négative (2120A, 2120B), dans lequel la largeur est une dimension mesurée dans une direction perpendiculaire à la direction de saillie.

3. Module de batterie (100, 100A, 100B) selon la revendication 1, dans lequel les hauteurs de saillie vers l'extérieur des bornes d'électrode positives (2110A, 2110B) faisant saillie et des bornes d'électrode négatives (2120A, 2120B) faisant saillie sont égales entre elles, dans lequel la hauteur est une dimension selon la direction de saillie (x).

4. Module de batterie (100) selon la revendication 1, dans lequel chacune des surfaces latérales opposées du boîtier inclut une portion concave-convexe (4000).

5. Module de batterie (100) selon la revendication 1, dans lequel un isolant est disposé à l'extérieur de chacune des bornes d'électrode positives (2110A, 2110B) faisant saillie et des bornes d'électrode négatives (2120A, 2120B) faisant saillie.

6. Module de batterie (100) selon la revendication 1, dans lequel des formes de saillie des bornes d'électrode positives (2110A, 2110B) faisant saillie et des bornes d'électrode négatives (2120A, 2120B) faisant saillie et une forme externe du boîtier entre les bornes d'électrode positives (2110A, 2110B) et une borne d'électrode négative (2120A, 2120B) sont configurées pour être mises en prise l'une avec l'autre.

7. Bloc-batterie comprenant le module de batterie (100 ; 100A, 100B) selon l'une quelconque des revendications 1 à 6, dans lequel le module de batterie (100A) est couplé à un autre module de batterie (100B).

8. Bloc-batterie selon la revendication 7, dans lequel les modules de batterie (100A, 100B) adjacents l'un à l'autre forment une portion de couplage (400 ; 400A, 400B, 400C) au niveau de laquelle les bornes de connexion (200A, 200B) sont couplées l'une à l'autre.

9. Bloc-batterie selon la revendication 8, dans lequel une borne d'électrode positive (2110B) d'un des modules de batterie (100B) adjacents l'un à l'autre et une borne d'électrode négative (2120A) d'un autre module de batterie (100A) le plus proche sont reliées électriquement l'une à l'autre via une barre omnibus intermédiaire (3000A).
